# EUROPEAN PATENT SPECIFICATION

(11) **EP 4 084 996 B1**
(45) Date of publication and mention of the grant of the patent: **08.10.2025**
(21) Application number: 20892504.0
(22) Date of filing: 24.11.2020
(51) Int. Cl.: B60R 21/235, D03D 1/02, D03D 19/00, D03D 15/283, D03D 15/50, D03D 15/56, D03D 15/573

(54) **AN AIRBAG MECHANISM**
AIRBAGMECHANISMUS
MÉCANISME D'AIRBAG

(30) Priority: 28.11.2019 TR 201918709
(43) Date of publication of application: 09.11.2022
(73) Proprietor: Bahçesehir Üniversitesi, 34349 Besiktas/Istanbul (TR); Selcuk Universitesi, 42130 Selcuklu/Konya (TR)
(72) Inventor: SIVRI, Caglar, Istanbul (TR); GUNEY, Sertac, Isparta (TR)
(74) Representative: Kaya, Erdem
(86) International application number: PCT/TR2020/051160
(87) International publication number: WO 2021/107901

(56) References cited:
- US-A1- 2005 287 371
- US-A1- 2015 115 574
- US-A1- 2015 246 655
- US-A1- 2015 246 655
- US-A1- 2017 036 626
- US-A1- 2017 036 626

## Description

### TECHNICAL FIELD

The invention relates to at least one airbag mechanism having at least one inflatable cushion to provide safety in vehicle, especially in the event of an accident.

### PRIOR ART

The system is called an airbag that is inflated by means of filling air or gas into it during a clash of automobiles and ensures the safety of the driver and passengers together with the seat belt. The airbags open within a very short duration less than 1/10 of a second and prevent serious injuries.

The field of airbag gains a place in the related literature or relevant market as a sub branch of the automotive textiles sometimes included in the technical textiles. The airbag fabrics are fabrics which have certain air permeability (generally 10 LT in dm² per second) and are generally manufactured from polyamide 6.6 yarn. The airbags are supposed to inflate fully within 45 to 55 milliseconds at the time of the accident. The airbag deflates within 75 to 80 milliseconds and the incident ends. The airbags can rescue lives and in case they are designed appropriately, they can ensure protection against serious injury in high speed clashes. In addition to this, the inflation rate of airbags creates enormous forces.

The airbag usage reduces the risk of head injuries that happen during journeys in a ratio of 81%. The airbags continue to rescue lives undoubtedly. However, airbags are opened suddenly in the vehicle in some accident situations and causes serious injury or death of children and even adults by hitting the individuals in the vehicle. As a result, all abovementioned problems have made it necessary to make an improvement in the relevant technical field.

Document US 2015/246655 A1 discloses an airbag mechanism according to the preamble of claim 1.

Document US 2017/036626 A1 discloses at least one airbag mechanism having at least one inflatable cushion which is made from an auxetic material.

### BRIEF DESCRIPTION OF THE INVENTION

The present invention is related to an airbag mechanism in order to eliminate the abovementioned disadvantages and to bring new advantages to the relevant technical field.

An aim of the invention is to provide an ergonomic airbag.

The invention relates to at least one airbag mechanism according to claim 1 to provide safety in vehicle, especially in the event of an accident so as to fulfill the aims mentioned above and obtained from the following description. Accordingly, the novelty is that said cushion is produced from a material with a partially negative Poisson ratio. Thus, in case the vehicle has an accident, the airbag is opened and contacts with the body of the person and an ergonomic airbag mechanism is achieved by taking the shape of the place to which it contacts.

An embodiment which is not part of the scope of the invention describes that the cushion is made of multi-axial fabric. Therefore, the cushion has different levels of absorbing the impact and copying the body is ensured.

Another possible embodiment which is not part of the scope of the invention is describes that the multi-axial fabric is obtained by combining a polyamide yarn with a yarn showing auxetic effect. Therefore, when the auxetic yarns on one axis on the cushion inflates the surface patterns on the other axis change and provides to absorb the impact and copy the shape of the body.

When the cushion is made of leno woven fabric, the cushion is provided with two different flexibility and elongation amounts.

When the multi-axial fabric is obtained by combining a Polyamide + Lycra^{(™)} yarn with a Polyamide +

Auxetic Polypropylene yarn, the obtained cushion fabrics are used to absorb the impact with a yarn, and the other elastic yarn with different elasticity/elongation amount surrounding this yarn is provided to copy the shape of the body simultaneously.

### BRIEF DESCRIPTION OF DRAWINGS

In Figure 1, a representative side section view of the first state of the inventive airbag mechanism is given.
In Figure 2, a representative side section view of the second state of the inventive airbag mechanism is given.
In Figure 3, a representative side schematic view showing the contact of the inventive airbag mechanism with the body of the individual during the accident is given.
In Figure 4, a representative front view of a multi-axial fabric not being part of the scope of the present invention that is used as a cushion material in an airbag mechanism is given.
In Figure 5, a representative front view of the leno woven fabric that is used as a cushion material in the inventive airbag mechanism is given.

### DETAILED DESCRIPTION OF THE INVENTION

In this detailed description, the subject of the invention is described by means of examples only for clarifying the subject matter such that no limiting effect is created.

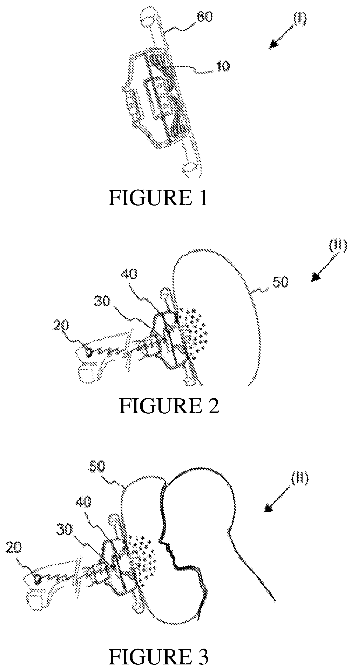

In Figure 1, a representative side section view of the inventive airbag mechanism (10) is given. Thus, said airbag mechanism (10) modifies from at least one first state (I) to at least one second state (II) so as to provide mainly safety in vehicle, especially in the event of an accident. Said airbag mechanism (10) is located within the vehicle body (60) and it prevents the vehicle driver and the passengers from receiving a blow during the accident in the second case (II). In a possible embodiment of the invention, said vehicle body (60) can be a steering wheel, door, torpedo, seat belt, etc.

In Figure 2, a representative side section view of the second state (II) of inventive airbag mechanism (10) is given. Accordingly, at least one sensor (20) so as to detect the car accident, at least one trigger (30) so as to activate at least one inflating element (40) depending on the signal received from said sensor (20), are positioned in the airbag mechanism (10). Said sensor (20) can be electromagnetic sensor, acceleration sensor, and load sensor in possible embodiments of the invention. The sensor (20) activates the trigger (30) by determining any accident time instantly. Said inflating element (40) is a chemical explosive in a possible embodiment of the invention. The inflation element (40) provides the inner section of at least one cushion (50) located in the airbag mechanism (10) with gas in a short time by being activated by means of the trigger (30). At least one hole (not shown in the figures) positioned on said cushion (50) in the airbag mechanism (10) ensures to discharge the gas in the cushion (50) after the accident.

At the time of accident, when the airbag mechanism (10) passes to the second state (II), the cushion (50) inflates and reduces the damage to the person by absorbing the impact. The cushion (50) is produced from a material with a partially negative Poisson ratio so as to prevent the same from giving damage to the person after hitting the person as a result of sudden inflation.

The materials with a negative Poisson ratio are also called auxetic materials. The auxetic materials have an extraordinary property in contrast to materials with a positive Poisson ratio. While auxetic materials are stretched on an axis, they also expand on an axis perpendicular to the same axis and in the contrary case when they are pressed on one axis; they are narrowed on axis perpendicular to the same axis. Materials exhibiting auxetic property absorb energy better compared to materials with positive Poisson ratio. The auxetic materials also exhibit synclastic curvature property that facilitates to take the form of the contact surface on the cushion (50). In Figure 3, a representative side schematic view showing the contact of the inventive airbag mechanism (10) with the body of the individual during the accident is given. Thus, this curvature feature gives the cushion (50) the ability to copy the human body and in this manner, the damage to the human body during and after the accident is minimized. In other words, the geometrically adaptation of the cushion (50) to human body is ensured.

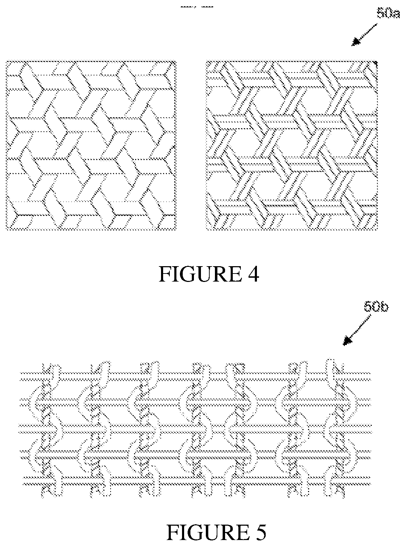

In Figure 4, a front view of the multi-axial fabric (50a) that is used as a cushion (50) material in an airbag mechanism (10) is given. Thus, in this embodiment not being part of the present invention, the cushion fabric is manufactured by multi-axial weaving. Said multi-axial fabric (50a) combines a standard yarn (in a possible embodiment of the invention, Polyamide 6.6) and a yarn showing auxetic effect. Therefore, the produced cushion can have the ability to absorb impact at different levels and copy the body, in other words, it is adapted to the required level of impact absorption and copy of the human body. When the auxetic yarns on one axis are swollen, the surface patterns on the other axis change and provide to absorb the impact and copy the shape of the body.

In Figure 5, a representative front view of the leno woven fabric (50b) that is used as a cushion (50) material in the inventive airbag mechanism (10) is given. Thus, in the production of cushion (50) with leno woven fabric (50b), fabric is obtained from a combination of yarns with two different flexibility and elongation amounts. In a possible embodiment of the invention, the yarns are a combination of Polyamide 6.6 + Lycra^{(™)} and Polyamide 6.6 + Auxetic Polypropylene. Thus, while the obtained cushion (50) fabrics are subject to impact, the impact is absorbed with linear yarn, the elastic spiral yarn with different elasticity/elongation amount surrounding the linear yarn copies the shape of the body simultaneously, it gradually absorbs the energy and distributes it to different sections. Moreover, in possible embodiments of the invention, the cushion (50) fabrics manufactured from these two fabric types are modified in a manner such that the NPO property of the Silicone Resin Coatings is not damaged.

In an exemplary embodiment of the present invention, the cushion (50) positioned in the airbag mechanism (10) contacts with the user's body by inflating during the accident. When the cushion (50) contacts with the body, it minimizes the load applied to the body and absorbs the impact ideally by copying the body to which it contacts. Subsequently, when the effect of the accidents ends, the air is discharged through the holes on the cushion (50) and the cushion (50) is provided to be deflated.

Consequently, an airbag mechanism (10) which is manufactured in the light of the auxetic effect principle, can absorb the impact severity during the accident by copying the human body, is ergonomic, and with high added value is obtained. It both reduces the risk of injury and death during the accident permanent and/or temporary damages to a minimum level after the accident.

The protection scope of the invention is specified in the appended claims and cannot be limited to the description made for illustrative purposes in this detailed description.

### REFERENCE NUMBERS GIVEN IN THE FIGURE

10 Airbag mechanism
20 Sensor
30 Trigger
40 Inflating Element
50 Cushion
50a Multi-Axial Fabric
50b Leno Woven Fabric
(I) First State
(II) Second State
60 Vehicle Body

## Claims

1. At least one airbag mechanism (10) having at least one inflatable cushion (50) for providing safety in-vehicles, wherein said cushion (50) is made of a leno-woven fabric (50b), **characterized in that** said leno-woven fabric (50b) being obtained from a combination of Polyamide+Lycra^{(™)} yarn and Polyamide+ Auxetic Polypropylene yarn, so that the cushion (50) has at least partially a negative Poisson's ratio.

## Patentansprüche

1. Mindestens ein Airbagmechanismus (10) mit mindestens einem aufblasbaren Kissen (50) zur Gewährleistung der Sicherheit in Fahrzeugen, wobei das Kissen (50) aus einem Leno-Gewebe (50b) besteht, **dadurch gekennzeichnet, dass** das Leno-Gewebe (50b) aus einer Kombination von Polyamid+Lycra^{(™)}-Garn und Polyamid+auxetischem Polypropylen-Garn hergestellt ist, so dass das Kissen (50) zumindest teilweise eine negative Poissonzahl aufweist.

## Revendications

1. Au moins un mécanisme d'airbag (10) comportant au moins un coussin gonflable (50) pour assurer la sécurité dans les véhicules, dans lequel ledit coussin (50) est constitué d'un tissu leno-tissé (50b), **caractérisé en ce que** ledit tissu leno-tissé (50b) est obtenu à partir d'une combinaison de fils Polyamide+Lycra^{(™)} et de fils Polyamide+Polypropylène auxétique, de sorte que le coussin (50) présente au moins partiellement un coefficient de Poisson négatif.
